(19) **Europäisches Patentamt**
**European Patent Office**
**Office européen des brevets**

(11) **EP 2 877 043 B1**

(12) # EUROPEAN PATENT SPECIFICATION

(45) Date of publication and mention
of the grant of the patent:
**05.12.2018 Bulletin 2018/49**

(51) Int Cl.:
*A23L 3/3472* (2006.01)     *A23B 4/14* (2006.01)
*C11B 5/00* (2006.01)

(21) Application number: **13742114.5**

(22) Date of filing: **16.07.2013**

(86) International application number:
**PCT/US2013/050598**

(87) International publication number:
**WO 2014/014860 (23.01.2014 Gazette 2014/04)**

(54) **USE OF NOVEL FOOD AND FEED ANTIOXIDANTS AS PRESERVATIVES IN FOOD AND FEED BASED ON ANTIOXIDANT ENZYMES EXTRACTED FROM ANIMAL BLOOD**

VERWENDUNG NEUARTIGER NAHRUNGS- UND FUTTERMITTELANTIOXIDANTIEN AUF BASIS VON ENZYMEN AUS TIERBLUTALS KONSERVIERUNGSMITTEL

UTILISATION DES NOUVEAUX ANTI-OXYDANTS POUR CONSERVER D'ALIMENTS ET D'ALIMENTS POUR ANIMAUX À BASE D'ENZYMES ANTI-OXYDANTES EXTRAITES À PARTIR DE SANG D'ANIMAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2012 US 201261671817 P**

(43) Date of publication of application:
**03.06.2015 Bulletin 2015/23**

(60) Divisional application:
**18156978.1**

(73) Proprietor: **Clemson University Research Foundation**
**Clemson, SC 29634 (US)**

(72) Inventors:
• **REUKOV, Vladimir**
**Central, South Carolina 29630 (US)**
• **VERTEGEL, Alexey**
**Easley, South Carolina 29642 (US)**

(74) Representative: **Zimmermann & Partner**
**Patentanwälte mbB**
**Postfach 330 920**
**80069 München (DE)**

(56) References cited:
**WO-A1-02/44214       WO-A1-95/13125**
**CN-A- 1 321 743       CN-A- 101 037 678**

CN-A- 101 886 062

• XUEMING XU ET AL: "Antioxidant activity of hydrolysates derived from porcine plasma", JOURNAL OF THE SCIENCE OF FOOD AND AGRICULTURE, vol. 89, no. 11, 30 August 2009 (2009-08-30), pages 1897-1903, XP055078614, ISSN: 0022-5142, DOI: 10.1002/jsfa.3670
• LIU Q ET AL: "Antioxidant activity and functional properties of porcine plasma protein hydrolysate as influenced by the degree of hydrolysis", FOOD CHEMISTRY, ELSEVIER LTD, NL, vol. 118, no. 2, 15 January 2010 (2010-01-15), pages 403-410, XP026497686, ISSN: 0308-8146, DOI: 10.1016/J.FOODCHEM.2009.05.013 [retrieved on 2009-05-13]
• JIN-ZHI WANG ET AL.: "Antioxidant activity of hydrolysates and peptide fractions of porcine plasma albumin and globulin", JOURNAL OF FOOD BIOCHEMISTRY, vol. 32, 12 May 2007 (2007-05-12), pages 693-707, XP002713002,
• Annel K. Greene: "Carnosine Concentration and Antioxidant Activity in Animal Protein Meals", , 1 June 2010 (2010-06-01), pages 1-2, XP002713003, Retrieved from the Internet: URL:http://www.rendermagazine.com/articles /2010-issues/2010-june/2010-06-acrec-solut ions/ [retrieved on 2013-09-09]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 877 043 B1

**(Cont. next page)**

- Steve Kopperud: "Antioxidants from Rendered Products Studied", , 1 February 2011 (2011-02-01), pages 1-3, XP002713004, Retrieved from the Internet: URL:http://www.rendermagazine.com/articles /2011-issues/2011-february/2011-02-acrec-s olutions/ [retrieved on 2013-09-09]
- Annel K. Greene: "Promising Research into Proteins as Antioxidants", , 1 October 2007 (2007-10-01), pages 1-3, XP002713005, Retrieved from the Internet: URL:http://www.rendermagazine.com/articles /2007-issues/2007-october/2007-10-acrec-so lutions/ [retrieved on 2013-09-09]
- C.G. HOVER ET AL: "A simple and efficient method for hemoglobin removal from mammalian tissue cytosol by zinc sulfate and its application to the study of lipoxygenase", PROSTAGLANDINS, LEUKOTRIENES AND ESSENTIAL FATTY ACIDS, vol. 62, no. 2, 1 February 2000 (2000-02-01), pages 97-105, XP055079405, ISSN: 0952-3278, DOI: 10.1054/plef.1999.0126
- J.GLAVIND: "Antioxidants in animal tissue", ACTA CHEMICA SCANDINAVICA, vol. 17, 1 January 1963 (1963-01-01), pages 1635-1640, XP002713006,
- CLARA S.F. BAH ET AL: "Slaughterhouse Blood: An Emerging Source of Bioactive Compounds", COMPREHENSIVE REVIEWS IN FOOD SCIENCE AND FOOD SAFETY, vol. 12, no. 3, 8 May 2013 (2013-05-08), pages 314-331, XP055078560, ISSN: 1541-4337, DOI: 10.1111/1541-4337.12013
- Alfred Gartner ET AL: "A simple, rapid and efficient isolation of erythrocyte Cu2Zn2-superoxide dismutase 549", Biochem. J, 1 January 1984 (1984-01-01), pages 549-551, XP055343594, Retrieved from the Internet: URL:https://www.ncbi.nlm.nih.gov/pmc/artic les/PMC1144073/pdf/biochemj00323-0265.pdf
- Tülin Aydem ET AL: "Purification and Partial Characterization of Catalase from Chicken Erythrocytes and the Effect of Various Inhibitors on Enzyme Activity", Turk J Chem c UB &dot; ITAK, 1 January 2003 (2003-01-01), pages 85-97, XP055343598, Retrieved from the Internet: URL:http://journals.tubitak.gov.tr/chem/is sues/kim-03-27-1/kim-27-1-13-0103-14.pdf
- Tohoku J Exp ET AL: "Erythrocyte Antioxidant Enzymes in Hyperlipoproteinemia 163 163 Erythrocyte Antioxidant Enzyme Activities and Lipid Peroxidation in Patients with Types IIb and IV Hyperlipoproteinemias", Tohoku J. Exp. Med, 1 January 2004 (2004-01-01), XP55388159, Retrieved from the Internet: URL:http://www.journal.med.tohoku.ac.jp/20 23/TJ2023_02.pdf
- Hanni Kirchner Julia Mühlhäußer: "BASICS Biochemie", 1 January 2009 (2009-01-01), Elsevier Verlag, München pages 118-118,
- Masaaki Kurata ET AL: "MINI REVIEW ANTIOXIDANT SYSTEMS AND ERYTHROCYTE LIFE-SPAN IN MAMMALS", Biochem. Physiol, 1 January 1993 (1993-01-01), pages 477-487, XP055390057, Retrieved from the Internet: URL:http://ac.els-cdn.com/030504919390121K /1-s2.0-030504919390121K-main.pdf?_tid=682 a6aa2-66d9-11e7-9c8d-00000aab0f26&acdnat=1 499847140_fe3b5525c2fe18a02ce310cdd3bab44 5
- Tohoku J Exp ET AL: "Erythrocyte Antioxidant Enzymes in Hyperlipoproteinemia 163 163 Erythrocyte Antioxidant Enzyme Activities and Lipid Peroxidation in Patients with Types IIb and IV Hyperlipoproteinemias", Tohoku J. Exp. Med, 1 January 2004 (2004-01-01), XP055388159, Retrieved from the Internet: URL:http://www.journal.med.tohoku.ac.jp/20 23/TJ2023_02.pdf

Remarks:

The file contains technical information submitted after the application was filed and not included in this specification

## Description

## Background of the Invention

Antioxidants are vital components of food industry, which has a major affect on global health and wellness. Antioxidants prevent rancidity caused by oxidation of lipids. Other industries also utilize antioxidants, including, but not limited to, those producing dyes, paints, and other oil-based materials. Most of the antioxidants currently being used are synthetic chemicals, and there is a global concern among regulatory bodies and customers regarding the safety of these compounds. There is a major shift towards naturally-derived antioxidants in response to these and other health concerns related to synthetic antioxidants. However, natural antioxidants currently available in the market are much more expensive, and are often not as effective as their synthetic counterparts. Thus, there is a need for inexpensive and capable natural antioxidants.

Many food products including human food, pet food, and animal feeds, contain fats and oils from rendered materials. Rendering is the process of converting inedible animal tissues such as tendons, bones, and organs into stable value-added materials. The majority of the material processed comes from slaughterhouses but can also come from restaurant grease, butcher shops, or grocery stores. The most common sources of rendered material are swine, cattle, poultry, turkey, sheep and fish. Rendering includes a process of separating the starting material into two separate streams of rendered materials - (1) high fat materials and (2) low fat materials that contain bone, ash, and protein. Thus, two separate yields can be obtained after the completion of the rendering process - a high fat commodity and a low fat commodity, such as protein meal. Rendered material can be used in over 3,000 industrial applications. For instance, the high fat component can be sold as lard or tallow or used as a source of biofuel. Additionally, the high fat component can be used in soaps, lubricants, detergents, cosmetics, other personal care products, or up-graded animal feed. Meanwhile, the low fat component, such as protein meal, can also be used as animal feed. There are over 250 rendering facilities in North America producing over 20 billion pounds of rendered material per year. About 50% of the total amount of the rendered material constitutes fats and oils.

Rendered fats and oils are important components in animal feeds. However, the rendered fats and oils can be degraded by lipid auto-oxidation processes that can decrease the nutritive value of animal feeds made with the rendered fats and oils. In addition, oxidation can affect the flavor, color, odor, and texture of feeds, which can affect palatability. For example, certain fatty acids such as linoleic acid and linolenic acid contain unsaturated carbon-carbon bonds that can be unstable and very susceptible to lipid auto-oxidation.

<Xueming Xu et al., "Antioxidant activity of hydrolysates derived from porcine plasma", Journal of the Science of Food and Agriculture, Vol. 89, No. 11, 30 August 2007, p. 1897-1903 describe that recovering porcine blood and converting it to high-value products is economically and environmentally desirable. In their study, the antioxidant properties of porcine plasma hydrolysates PPE and PPA prepared with pepsin and papain were investigated.

In Liu Q. et al., "Antioxidant activity and functional properties of porcine plasma protein hydrolysate as influenced by the degree of hydrolysis", Food Chemistry, Elsevier Ltd., NL, Vol. 118, No. 2, 15 January 2010, pages 403-410 the antioxidant activity and functional properties of porcine blood plasma protein hydrolysates prepared with alcalase at 6.2 %, 12.7 % and 17.6 % degree of hydrolysis were investigated. They found out that the peptide with the strongest antioxidant activity had the amino acid sequence His-Asn-Gly-Asn. Furthermore, these results indicated that porcine blood plasma protein hydrolysates could be used as antioxidant, but that these hydrolysates were of limited utility as an emulsifying or foaming agent.

Jin-Zhi Wang et al., "Antioxidant activity of hydrolysates and peptide fractions of porcine plasma albumin and globulin", Journal of Food Biochemistry, Vol. 32, 12 May 2007, pages 693-707 investigated the antioxidant properties of hydrolysates of porcine plasma albumin and globulin obtained by hydrolysis with alcalase. The peptides obtained were separated into five groups according to their molecular weight according to their molecular weight by ultrafiltration. They found out that the peptide fractions with smaller molecular weight (< 3 kDa) had a higher reducing power compared to peptide fractions having a larger molecular weight.>

While antioxidants have been added as feed preservatives to prevent degradation of the fats and lipids contained in animal feed components sourced from rendered materials, many of these antioxidants, such as ethoxyquin, mixed tocopherols (vitamin E), vitamin C, and butylated hydroxyanisole/butylated hydroxytoluene, are expensive and must be obtained from a source outside the rendering industry. In addition, the FDA and other regulatory agencies, as well as consumers, have expressed concern about the safety of synthetic antioxidants such as ethoxyquin. As such, the rendering industry seeks natural solutions to extend the shelf life of its products in an affordable manner while maintaining product freshness and quality. Thus, what is needed in the art is a potent antioxidant that can be used as a feed preservative that is sourced from within the rendering industry, such as from animal byproducts, in a cost-effective manner and that can be easily and efficiently obtained. More broadly, there is a need and customer demand for a potent and inexpensive natural antioxidant that can be used in various types of foods, including human food, pet food and animal feeds. What is also needed is a method for extracting antioxidants from animal byproducts without the use of organic solvents, which can be costly and raise safety concerns.

## Summary of the Invention

Generally speaking, the present disclosure is directed to the use of an antioxidant form a natural source as a foodor feed preservative.

The present disclosure is directed to the use of an antioxidant for preserving a food product according to claim 1, wherein the antioxidant is extracted from animal blood. The antioxidant comprises superoxide dismutase (SOD), catalase, glutathione, glutathione reductase, and glutathione peroxidase. Further, the antioxidant can be generally free from hemoglobin. It should be understood that the antioxidant does not have to be completely purified and can contain other blood components and other compounds added during the processing of the blood to achieve partial purification, such as compounds added to remove hemoglobin or to increase the antioxidant concentration.

Extracting the antioxidant from animal blood can include obtaining a sample of animal blood, wherein the animal blood contains erythrocytes; lysing the erythrocytes to form a solution containing the antioxidant; and treating the solution to remove hemoglobin from the solution , such as by treating the solution with at least one compound or by removing the hemoglobin via physical means, such as ultrafiltration or electrophoresis. In some embodiments, the compound can be an inorganic compound. The inorganic compound can be a metal salt, such as, for example, a zinc salt, or another zinc-containing compound. The inorganic compound can be added at a concentration ranging from 0.1% w/v to about 20% w/v based on the volume of the solution. In some embodiments, the antioxidant can be in the form of a solution applied at a concentration ranging from about 0.1 microliters per gram of food product to about 100 microliters per gram of food product. The antioxidant can be in an unpurified state, and the food product can be pet food, animal feed, or food for human consumption.

## Brief Description of the Figures

A full and enabling disclosure of the present subject matter, including the best mode thereof to one of ordinary skill in the art, is set forth more particularly in the remainder of the specification, including reference to the accompanying figures in which:

Fig. 1 illustrates a method of extracting an antioxidant (i.e., non-purified superoxide dismutase (SOD)) sourced from an animal byproduct (i.e., blood) as disclosed herein.

Fig. 2 shows the non-purified chicken blood SOD activity of various samples after 20 weeks at 25°C, compared to a control at 4°C.

Fig. 3 shows the non-purified chicken blood SOD activity of various samples after 40 weeks at 25°C, compared to a control at 4°C.

Fig. 4 is a graph comparing the antioxidant activity of non-purified SOD extracted from animal byproducts compared with that of currently used feed preservative antioxidants via a colorimetric thiobarbituric acid reactive substances (TBARS) assay.

Fig. 5 illustrates another method of extracting unpurified natural antioxidants ("crude protein" or CP) from an animal source (i.e., blood).

Fig. 6 is a graph comparing the ability of the natural antioxidants in the crude protein of the present disclosure with the ability of currently used feed preservative antioxidants to prevent oxidation in ground chicken patties. Ferrous oxidation - Xylenol Orange (FOX) assay have been used to assess degree of oxidation in chicken patties. "Crude protein" or CP here and below refers to an unpurified mixture of natural antioxidants, present along with other biomolecules and substances, obtained by the general method illustrated in Fig. 5.

Fig. 7 is a graph comparing the ability of the natural antioxidants in the "crude protein" of the present disclosure with the ability of currently used feed preservative antioxidants to prevent oxidation in chicken fat using FOX assay.

Fig. 8 is a graph comparing the ability of the natural antioxidants in the "crude protein" of the present disclosure added at different concentrations with the ability of currently used feed preservative antioxidants to prevent oxidation in ground chicken patties using FOX assay. As low as 17 micrograms of CP per gram food, or approximately 17 liter of CP per ton food were found to be as efficient as 1000 ppm PET-OX™ (based on the fat content), a concentration currently used in industry.

Fig. 9 is a graph showing the ability of the natural antioxidants in the "crude protein" of the present disclosure to remain effective after accelerated aging at 50°C for up to 10 days in a ground chicken meat model. This corresponds to approximately 3 months shelf life at room temperature.

Fig. 10 is another graph showing the ability of the natural antioxidants in the "crude protein" of the present disclosure to remain effective after accelerated aging at 50°C in a chicken fat model.

Fig. 11 is a graph comparing the antioxidant activity of a crude protein solution, SOD concentrate, 1000 U/mL catalase, PET-OX™, and water (no antioxidant activity) when applied to beef patties using a fluorometric TBARS assay.

Fig. 12 is a graph comparing the antioxidant activity of a crude protein solution, SOD concentrate obtained using the method shown in Fig. 1, 1000 U/mL SOD, 1000 U/mL catalase, PET-OX™, and water (no antioxidant) when applied to chicken fat using a FOX assay.

## Detailed Description of Preferred Embodiments

In general, disclosed herein is an antioxidant that is used as a food preservative. In particular, the antioxidants are derived from erythrocytes (red blood cells) in blood, as RBCs are natural oxygen carriers and are equipped with a highly efficient antioxidant system that includes a number of antioxidant enzymes and compounds. These antioxidants include glutathione, enzymes superoxide dismutase, catalase, glutathione peroxidase, and glutathione reductase and other biomolecules and compounds, some of which may yet be unknown. These antioxidants can be isolated from blood in purified form but in many circumstances can be used in partially purified form, in a mixture with other blood components. In many cases, use of partially purified antioxidant mixtures may be beneficial because of lower processing costs. After the antioxidants are extracted, such as in the form of partially purified "crude protein", the antioxidants are then added to animal feed, pet food, food for human consumption, oils, or anyother food product where oxidation is a concern.

One of the antioxidants to be extracted is superoxide dismutase (SOD) that can be sourced from within the rendering industry, such as from animal byproducts. The non-purified antioxidantis extracted from animal blood and is used as a food preservative. SOD is an enzyme that functions as a free-radical scavenger. At the cellular level, SOD out-competes damaging oxidation reactions, thus protecting cells from oxidation toxicity. SOD can catalyze the dismutation of superoxide into less toxic oxygen and hydrogen peroxide. The SOD-catalysed dismutation of superoxide may be written with the following half-reactions:

$$M^{(n+1)}\text{-SOD} + O_2^- \rightarrow M^{n+}\text{-SOD} + O_2$$

$$M^{n+}\text{-SOD} + O_2^- + 2H^+ \rightarrow M^{(n+1)+}\text{-SOD} + H_2O_2$$

where M = Cu (n=1); Mn (n=2); Fe (n=2); Ni (n=2). In this reaction the oxidation state of the metal cation oscillates between n and n+1. The oxidation reaction occurs quite rapidly in the cell to protect sensitive and critical cellular targets, such as lipids in the cell membrane.

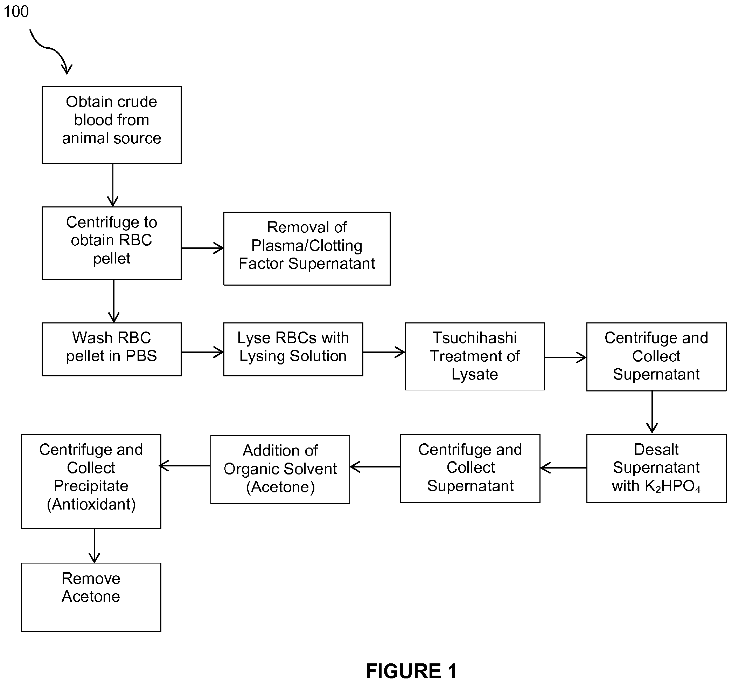

Beneficially, SOD can be extracted from animal blood at relatively little cost. SOD is extracted and stored in the form of a non-purified enzyme concentrate so that it maintains at least 50% or more of its initial antioxidant activity. Moreover, such unpurified enzyme concentrate also exhibits catalase activity - another enzyme effective against hydrogen peroxide, which can act synergistically with SOD, and reduce peroxide, formed from superoxide. A general overview of the extraction process not according to the invention is shown in the flow diagram of Fig. 1. In the method 100 of Fig. 1, first, the crude animal tissue can be obtained from any source, such as from a slaughterhouse/poultry plant. The crude animal tissue is blood, as blood is readily processable according to an extraction process.Any blood source can be utilized including, without limitation, cattle, swine, poultry, sheep, chicken, or any other suitable animal source.

The bloodsource can be processed to concentrate those components of the blood that contain SOD. For example, in those embodiments in which crude blood is utilized, the crude blood can be processed to obtain a material having a high concentration of red blood cells. By way of example, the crude blood can be centrifuged, for instance at a rate of from about 250 g (relative centrifugal force) to about 750 g, such as at a rate of about 500 g, in order to separate the blood and obtain a product having a high concentration of red blood cells (RBCs) as a pellet. The supernatant (i.e., plasma and other clotting factors) can be discarded or used for other purposes. The high SOD containing pellet can be further processed to extract the SOD. For example, the red blood cells can be washed in 1x Phosphate Buffered Saline (PBS) to remove any remaining plasma and/or clotting factors. Next, the pellet of RBCs can be lysed in a lysing solution, using a volume of solution that is twice the volume of the RBC pellet. The lysing solution can generally include 0.15 M ammonium chloride ($NH_4Cl$), 10 mM potassium bicarbonate ($KHCO_3$), 0.1 mM ethylenediaminetetraacetic acid (EDTA), and 1% polyoxyethylene octyl phenyl ether (Triton X-100) in distilled water. Treating the RBC pellet in the lysing solution lyses the red blood cells and releases the SOD enzyme in conjunction with other components of the cells. The lysis can be carried at for about 20-30 minutes, such as about 25 minutes, under vigorous shaking. The lysis solution can include cold (4°C) deionized water with or without addition of surfactants such as TritonX or other suitable surfactants.

The SOD-containing hemolysate can then be separated from other components of the mixture. For instance, other proteins can be denatured by subjecting the hemolysate to a Tsuchihashi treatment where the hemolysate supernatant is mixed with ethanol (about 0.25 volume of the supernatant) and chloroform (about 0.15 volume of the supernatant). During the treatment, the hemolysate is stirred vigorously for about 25 minutes, resulting in a brick-red solution. The solution can then be centrifuged at a rate of from about 3000 g to about 5000 g, such as at a rate of about 4000 g, for about 10-20 minutes, such as for about 15 minutes, in order to separate the denatured proteins and hemoglobin from the other lysed red blood cell contents in the chloroform phase. The relatively clear supernatant (ethanol phase) can be collected. Next, about 300 grams/liter of potassium phosphate ($K_2HPO_4$) can be added to the supernatant to move the SOD enzyme from the organic phase to the water phase, wherein it can be reactivated in an ionic environment. This solution can be centrifuged at a rate of from about 4000 g to about 6000 g, such as at a rate of about 5000 g, to precipitate additional extraneous proteins and remove left over chloroform. The pale yellow supernatant containing the SOD can then be collected.

Next, acetone (stored at -20°C) or another organic solvent can be added to the supernatant at a volume ratio of 2:1, and the resulting solution can be centrifuged at a rate of from about 4000 g to about 6000 g, such as about 5000 g, for about 10-20 minutes, such as about 15 minutes, to ensure precipitation of the desired protein of interest. At this point, the SOD can precipitate out of the acetone or other solvent solution, resulting in a cream-colored precipitate. The acetone can then be recovered, leaving the SOD enzyme, which is non-purified, meaning it has not undergone purification via chromatography or gel filtration after precipitation out of solution. Next, the non-purified SOD enzyme can be washed twice in 1x Dulbecco's PBS, centrifuged at a rate of from about 4000 g to about 6000 g, such as at a rate of about 5000 g, and stored in a solution that can include a stabilizer and/or a cryoprotectant such as, without limitation, trehalose, sucrose, dextrose, mannitol, glycerol, etc., or the SOD can be lyophilized for future use. The SOD activity can be measured in Units/milliliter of initial blood volume (U/mL of initial blood volume) via a WST SOD activity assay (water-soluble tetrazolium salt, (2-(4-Iodophenyl)- 3-(4-nitrophenyl)-5-(2,4-disulfophenyl)-2H-tetrazolium, monosodium salt)) and can range from about 150 to about 300 U/mL of initial blood. Further, the catalase activity can be measured using a catalase activity assay and can be about 125 U/mL.

It should be understood that the process described above is one manner for extracting non-purified antioxidative enzymes from animal blood, although it is possible to simplify the process even further, such as by eliminating organic solvents from the process. For example, in some instances, live poultry can be processed at a poultry/turkey plant by sending the poultry/turkey through the camera in a controlled $CO_2$ atmosphere. Such treatment protects the poultry blood from clotting, which allows for the removal of EDTA (an anti-clotting agent) from the procedure described above. Further, distilled water can be used to lyse the RBCs instead of Triton X, and the chloroform used in Tsuchihashi treatment can be replaced with an alternative solvent.

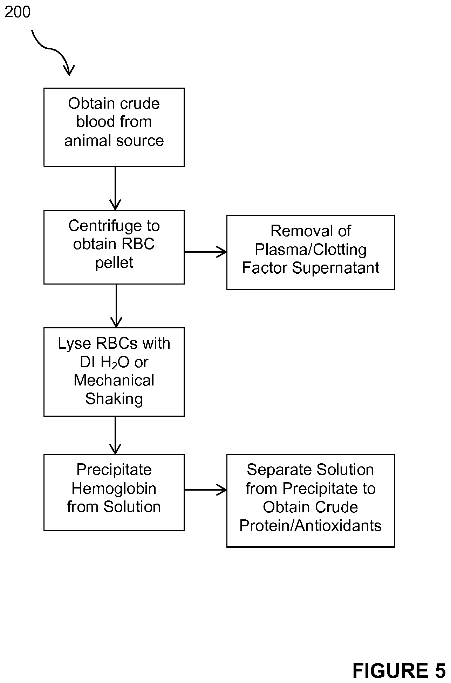

The crude protein extraction can be simplified to avoid the use of such organic solvents as acetone and chloroform, which can be toxic. Such a method can also provide cost savings and can result in the simultaneous extraction of several biomolecules that are involved in antioxidant pathways, including, superoxide dismutase (SOD), catalase, glutathione, glutathione reductase, and glutathione peroxidase. The crude protein composition containing these biomolecules can be extracted first by obtaining blood from an animal source, as shown in method 200 of Fig. 5. The blood can be acquired, for example, at a meat or poultry processing plant or at slaughterhouse, after delivery/transportation, or at any other time point during which the animal source is being processed at a rendering facility.

Then, as further shown in the method 200 of Fig. 5, after the blood is obtained, it can be processed, such as by centrifugation, to separate the erythrocytes/red blood cells from the other blood components, such as plasma and clotting factors. After removal of the supernatant, deionized water can be added to the RBCs to facilitate cell lysis. These separation and lysis steps can be skipped, for example if erythrocytes were mechanically lysed during processing (e.g., during transportation or pumping). In the alternative or in conjunction with the addition of deionized water, mechanical shaking or ultrasonication can be utilized to lyse the RBCs. Further, although cell lysis is shown in Fig. 5 as being carried out after separation of the RBCs from whole animal blood, it is to be understood that lysis can also be performed in the whole blood without first separating the RBCs from the other blood components. Regardless of whether the lysis is carried out on whole blood or RBCs only, after cell lysis is complete, a compound or a mixture of two or more compounds can be added to the lysed RBCs to precipitate hemoglobin and facilitate its removal from the lysed RBCs. The hemoglobin precipitation compound can be an inorganic compound such as any suitable metal salt. In one embodiment, the metal salt can be a zinc salt. The zinc salt can be zinc chloride, zinc sulfate, zinc acetate, etc. In other embodiments, an organic solvent such as ethanol, 1-butanol, 2-butanol, isobutanol, tert-butanol, or a combination thereof can be utilized to separate the hemoglobin from the lysed RBCs. Other chemical (change of pH, ionic force etc.) or physical (change of temperature, density separation etc.) means can also be utilized to precipitate the hemoglobin. Further, it is also to be understood that any suitable physical means can be utilized to remove the hemoglobin, such as filtering through a size-separation membrane or electromagnetic fields, ultrafiltration, or electrophoresis. In any event, the resulting solution of lysed RBCs contains the crude protein that includes biomolecules having antioxidant activity, such as superoxide dismutase (SOD), catalase, glutathione, glutathione reductase, and glutathione peroxidase. If desired, when the hemoglobin precipitation compound is an inorganic compound such as a metal salt, such compound can be removed from the solution and the crude protein can be collected in a powder form via the addition of, for instance, a concentrated solution of ammonium sulfate or ammonium nitrate.

For example, about 1 liter of animal blood can be centrifuged at about 1000 g to about 10,000 g for a time period ranging from about 1 minute to about 30 minutes to obtain packed RBCs, which could later be disrupted chemically by mixing with lysing agent solution (e.g. DI water or surfactant) or lysed mechanically by vigorous shaking or application of pressure. Then, a hemoglobin precipitation compound can be added to the cell lysate. The hemoglobin precipitation compound can be an organic solvent such as ethanol, 1-butanol, 2-butanol, isobutanol, (2-methyl-1-propanol), tert-butanol (2-methyl-2-propanol), or other similar solvents leading to precipitation of hemoglobin, as known by those skilled in the art. The solvent can be added to the blood at a concentration ranging from about 1% w/v to about 50% w/v based on the volume of the supernatant solution. For instance, the solvent can be added at a concentration ranging from about 2.5% w/v to about 25% w/v, such as from about 5% w/v to about 20% w/v, such as from about 7.5% w/v to about 15% w/v, based on the volume of the solution. In one embodiment, the organic solvent can be 1-butanol, which can be added at a concentration of about 7% w/v. In still another embodiment, the organic solvent can be tert-butanol, which can be added at a concentration of about 9% w/v. In yet another embodiment, two compounds can be added, where the first compound can be ethanol and the second compound can be 1-butanol, 2-butanol, or isobutanol (2-methyl-1-propanol). In such an embodiment, the first compound can be added at a concentration ranging from about 5% w/v to about 50% w/v, while the second compound can be added at a concentration ranging from about 0.5% w/v to about 30% w/v based on the volume of the solution.

In another embodiment, the hemoglobin precipitation compound can be an inorganic compound, such as a zinc salt or other suitable metal salt. When the hemoglobin precipitation compound is a zinc or other metal salt, it can be applied at a concentration of about 0.1% w/v to about 20% w/v, such as from about 0.5% w/v to about 15% w/v, such as from about 1% w/v to about 10% w/v, based on the volume of the supernatant. After the hemoglobin precipitation compound is added, the resulting solution can be incubated for about 15 minutes or longer, with occasional shaking. The hemoglobin can be precipitated and then removed by decantation or centrifugation at about 1000 g to about 5000 g for a time period of about 1 minute to about 15 minutes. It is also to be understood that analogous procedures can be executed in a flow-through system.

After extraction of the crude protein antioxidants into a solution or powder form, the solution or powder is applied to a pet food product, an animal feed product, or food product for human consumption to prevent oxidation. For instance, when in the form of a solution, the antioxidants extracted from blood can be applied to the product at a concentration of from about 0.1 microliters of antioxidant solution per gram of product to about 100 microliters of antioxidant solution per gram of product, such as from about 2.5 microliters of antioxidant solution per gram of product to about 90 microliters of antioxidant solution per gram of product, such as from about 5 microliters of antioxidant solution per gram of product to about 75 microliters of antioxidant solution per gram of product. In one embodiment, the product can be applied at a concentration of from about 6.25 microliters of antioxidant solution per gram to about 50 microliters of antioxidant solution per gram of product.

Further, it is to be understood that the crude protein antioxidant solution itself can be concentrated after it is extracted from the blood. For instance, in some embodiments, the antioxidant solution can be from about a 1.5X to about a 10X concentrated solution, such as from about a 2X to about a 8X concentrated solution, such as from about a 3X to about a 6X concentrated solution. In one embodiment, for instance, the antioxidant solution applied to a product can be a 5X concentrated solution.

The antioxidant extraction methods and the resulting non-purified antioxidants that are used (i.e., antioxidant that has not been purified using chromatography or gel filtration) as a food or feed preservative, as disclosed herein, may be better understood with reference to the following examples.

## Comparative Example 1

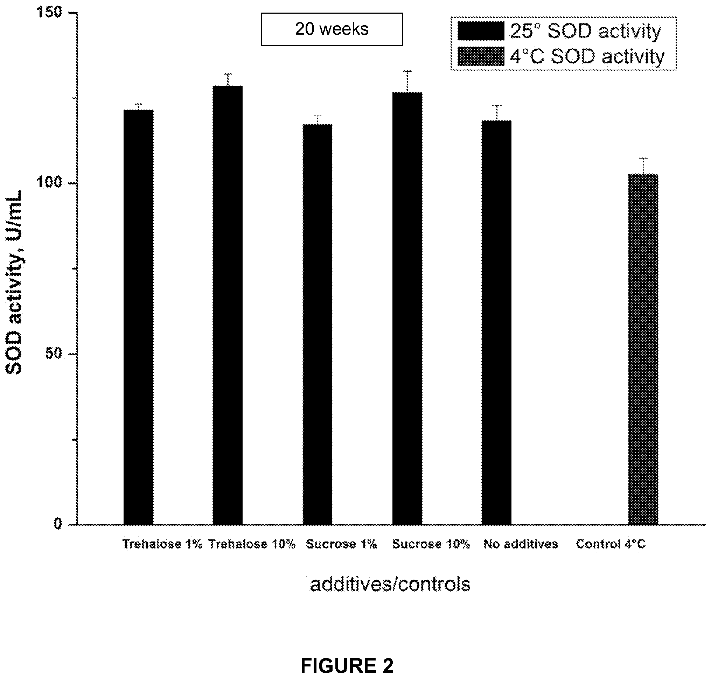

Referring to Fig. 2, the activity in U/mL of SOD extracted by the method of Fig. 1 that was stored in various solutions for 20 weeks at a temperature of 25°C, compared to a control sample stored at 4°C, was determined in the following manner. In order to determine the antioxidant activity of the non-purified SOD in units per milliliter (U/mL) the SOD assay with water-soluble tetrazolium salt, WST-1 (2-(4-Iodophenyl)- 3-(4-nitrophenyl)-5-(2,4-disulfophenyl)-2H-tetrazolium, monosodium salt) can be used. In this assay, WST-1 produces a water-soluble formazan dye upon reduction with the superoxide anion. The rate of the reduction of WST-1 with $O_2^-$ is linearly related to the xanthine oxidase (XO) activity, and this reduction is inhibited by SOD.

As a control, the activity of a sample of SOD in solution and kept at 4°C was determined to be about 100 U/mL. Meanwhile, the activity of a sample of SOD stored in a 1% trehalose solution was from about 100 U/mL to about 125 U/mL, the activity of a sample of SOD stored in a 10% trehalose solution was from about 125 U/mL to about 150 U/mL, the activity of a sample of SOD stored in a 10% sucrose solution was from about 100 U/mL to about 125 U/mL, and the activity of a sample of SOD stored in a 1% sucrose solution was from about 0 U/mL to about 10 U/mL. The activity of a sample of SOD stored in a solution without additives was from about 100 U/mL to about 125 U/mL.

## Comparative Example 2

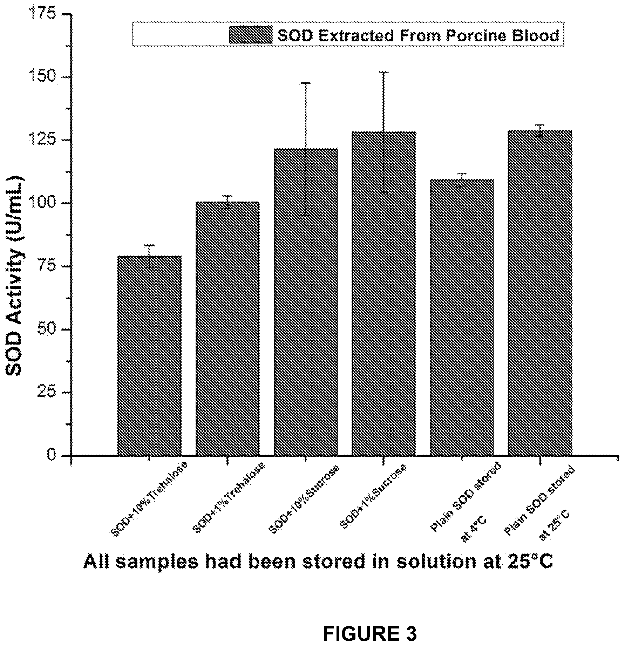

Next, as shown in Fig. 3, the activity in U/mL of SOD stored in various solutions for 40 weeks at a temperature of 25°C, compared to a control sample stored at 4°C, was determined in the same manner as described in Example 1 above. As a control, the activity of a sample of SOD in solution and kept at 4°C was determined to be about 100 U/mL. Meanwhile, the activity of a sample of SOD stored in a 1% trehalose solution was from about 90 U/mL to about 105 U/mL, the activity of a sample of SOD stored in a 10% trehalose solution was from about 70 U/mL to about 80 U/mL, the activity of a sample of SOD stored in a 10% sucrose solution was from about 90 U/mL to about 150 U/mL, and the activity of a sample of SOD stored in a 1% sucrose solution was from about 100 U/mL to about 150 U/mL. The activity of a sample of SOD stored in a solution without additives was about 100 125 U/mL. Examples 1 and 2 show that SOD extracts obtained using the method shown in Fig. 1 and stored without any stabilizers remain stable and active for at least 40 weeks if stored at room temperature.

## Comparative Example 3

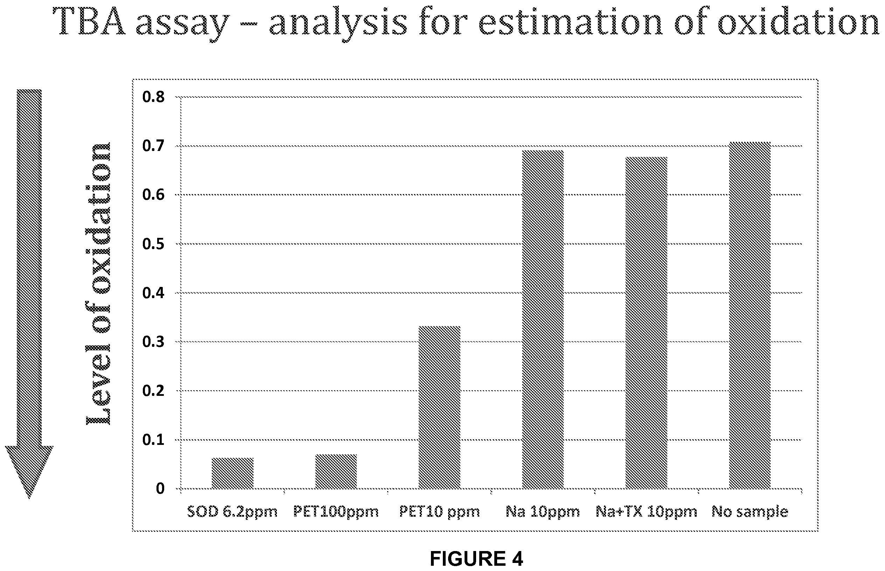

Further, as shown in Fig. 4, antioxidant efficiency of SOD extracts was determined in a model food system. In this particular assay, a model lipid - safflower oil has been used. Oxidation levels for safflower oil samples treated with SOD were determined using a thiobarbituric acid (TBA) assay and compared to those in safflower oil samples treated by three commercially available antioxidants currently used in feed preservatives - PET-OX™ (Pet), NATUROX™ (Na), and NATUROX PLUS™ (Na-TX). PET-OX™ is a synthetic antioxidant currently used in animal feed that contains butylated hydroxyanisole and butylated hydroxytoluene. It is generally used in animal feed at a concentration of from about 150 parts per million (ppm) to about 500 ppm. Meanwhile, NATUROX™ and NATUROX PLUS™ are natural antioxidants that contain mixed tocopherols. After treating animal feed samples with various concentrations of the three types of antioxidants, the thiobarbituric acid (TBA) assay was performed, and the level of TBA present was measured as absorbance at 532 nm corresponding to the level of lipid oxidation. Hence, a sample having a lower absorbance corresponded with a lower amount of oxidation of the food sample.

First, a control sample that was not treated with an antioxidant had an absorbance of 0.7 to about 0.8. A sample treated with 10 ppm of NATUROX™ and a sample treated with 10 ppm of NATUROX PLUS™ both had an absorbance of about 0.6 to about 0.7. Meanwhile, a sample treated with 10 ppm of PET-OX™ had an absorbance of from about 0.3 to about 0.4. By increasing the concentration of the PET-OX™ to 100 ppm, the absorbance was reduced to a level of from about 0.05 to about 0.1, indicating a lower level of oxidation. When a sample was treated with 6.2 ppm of SOD extract, the sample had an absorbance of from about 0.05 to about 0.1. Thus, a sample treated with only 6.2 ppm of SOD exhibits a similar amount of oxidation as a sample treated with 100 ppm of the PET-OX™ antioxidant.

Thus, even though the SOD antioxidant of the present disclosure is not purified via chromatography or gel filtration methods, the graph of Fig. 4 demonstrates that process described herein still yields a potent antioxidant that can prevent oxidation of, for instance, fats and oils in animal feed. However, it is to be understood that the non-purified SOD product described herein, as well as the method of extracting the non-purified SOD product, may also be used on other products besides foods or animal feeds, such as paint, caulking, plastics, or any other products that are at risk for oxidation.

## Example 1

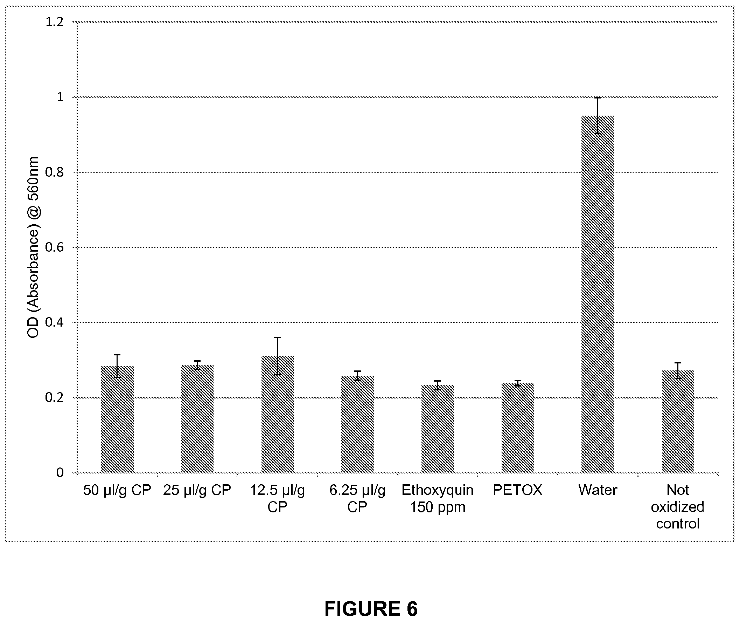

Example 1 refers to Fig. 6, which compares the ability of the natural antioxidants in the crude protein of the present disclosure with the ability of currently used feed preservative antioxidants to prevent oxidation in ground chicken patties. The crude protein was obtained by the method of Fig. 5 where zinc chloride was used to separate the hemoglobin in the RBCs from the crude protein solution, which contains the antioxidants. The crude protein was then applied to a first sample of chicken meat at a concentration of 50 microliters per gram, a second sample of chicken meat at a concentration of 25 microliters per gram, a third sample of chicken meat at a concentration of 12.5 microliters per gram, and a fourth sample of chicken meat at a concentration of 6.25 microliters per gram. The zinc concentration in all crude protein samples was 250 ppm. For comparison, ethoxyquin was applied to a fifth sample of chicken meat at a concentration of 150 parts per million (ppm) based on total weight, PET-OX™ was applied to a sixth of chicken meat at a concentration of 1000 ppm based on fat content, and water was applied to a seventh sample of chicken meat as a control. These seven samples were subjected to oxidation at 50°C for 12 hours. An eighth sample having no treatment was left as the non-oxidized control and was stored in a refrigerator at 4°C.

After 12 hours, a ferrous oxidation-xylenol (FOX) assay was run on the samples to determine the absorbance (optical density) of the remaining solution at 560 nanometers, where a lower absorbance reading corresponds with a lower level of oxidation. As shown, the crude protein solutions of the present disclosure had an absorbance of less than about 0.3, which was similar to the readings of currently available antioxidants (ethoxyquin and PET-OX™), which are not as safe and are more expensive. The absorbance of the four crude protein samples was also similar to the absorbance of the sample that was not subjected to oxidation, which indicates that the crude protein solutions extracted by the method of the present disclosure and applied to chicken meat at concentrations ranging from about 6.25 microliters per gram to about 50 microliters per gram are effective at preventing oxidation of the chicken meat.

## Example 2

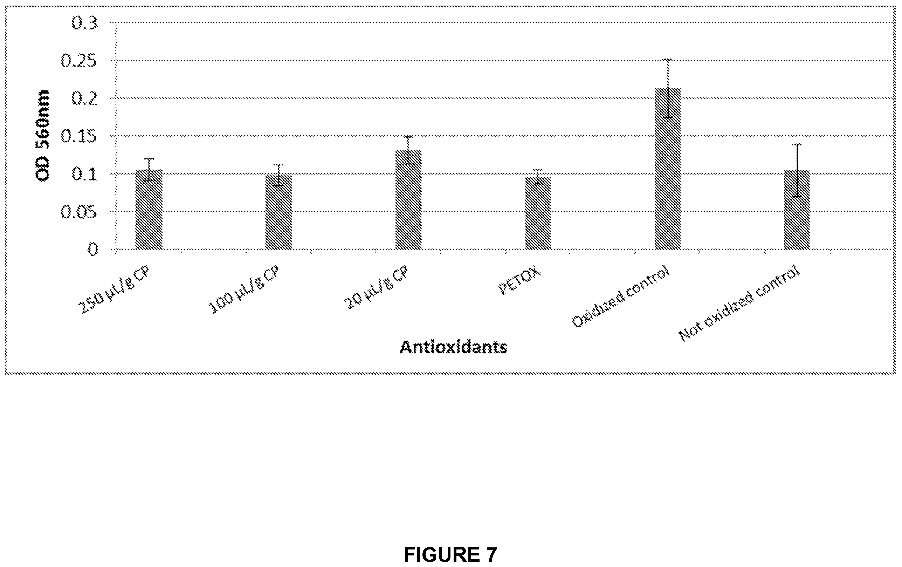

Example 2 is summarized by Fig. 7, which is a graph comparing the ability of the natural antioxidants in the crude protein of the present disclosure with the ability of currently used feed preservative antioxidants to prevent oxidation in liquid chicken fat. Crude protein was extracted according to the method described in Fig. 5, the resulting solution containing natural antioxidant biomolecules. The crude protein solution was mixed with liquid chicken fat so that the crude protein was present in a first sample at a concentration of 250 microliters per gram of fat, in a second sample at a concentration of 100 microliters per gram of fat, and in a third sample at a concentration of 20 microliters per gram of fat. For comparison, PET-OX™ was applied to a fourth sample of chicken fat at a concentration of 500 ppm. A fifth sample of chicken fat was not treated with an antioxidant (e.g., oxidized control). These five samples were subjected to oxidation at 50°C for 12 hours. An sixth sample having no treatment was left as the non-oxidized control and was stored in a refrigerator at 4°C.

After 12 hours, a ferrous oxidation-xylenol (FOX) assay was run on the samples to determine the absorbance (optical density) of the remaining solution at 560 nanometers, where a lower absorbance reading corresponds with a lower level of oxidation. As shown, the crude protein solutions of the present disclosure had an absorbance of less than about 0.125, which was similar to the reading for PET-OX™), which is not as safe and is more expensive. The absorbance of the three crude protein samples was also similar to the absorbance of the sample that was not subjected to oxidation and much less than the untreated sample that was subjected to oxidation, which indicates that the crude protein solutions extracted by the method of the present disclosure and applied to chicken meat at concentrations ranging from about 20 microliters per gram to about 250 microliters per gram are effective at preventing oxidation of liquid chicken fat.

## Example 3

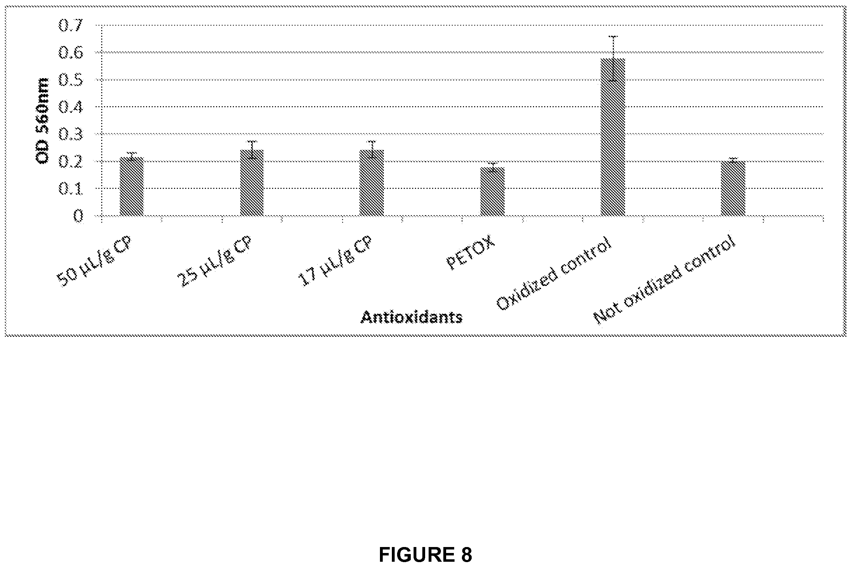

Example 3 refers to Fig. 8, which compares the ability of the natural antioxidants in the crude protein of the present disclosure with the ability of currently used feed preservative antioxidants to prevent oxidation in ground chicken patties. Crude protein was extracted according to the method described in Fig. 5, the resulting solution containing natural antioxidant biomolecules. The crude protein solution was mixed with ground chicken patties so that the crude protein was present in a first sample at a concentration of 50 microliters per gram of ground meat, in a second sample at a concentration of 25 microliters per gram of ground chicken patties, and in a third sample at a concentration of 17 microliters per gram of ground chicken patties. For comparison, PET-OX™ was applied to a fourth sample of ground chicken patties at a concentration of 500 ppm. A fifth sample of ground chicken patties was not treated with an antioxidant (e.g., oxidized control). These five samples were subjected to oxidation at 50°C for 12 hours. An sixth sample having no treatment was left as the non-oxidized control and was stored in a refrigerator at 4°C.

After 12 hours, a ferrous oxidation-xylenol (FOX) assay was run on the samples to determine the absorbance (optical density) of the remaining solution at 560 nanometers, where a lower absorbance reading corresponds with a lower level of oxidation. As shown, the crude protein solutions of the present disclosure had an absorbance of less than about 0.2, which was similar to the reading for PET-OX™), which is not as safe and is more expensive. The absorbance of the three crude protein samples was also similar to the absorbance of the sample that was not subjected to oxidation and much less than the untreated sample that was subjected to oxidation, which indicates that the crude protein solutions extracted by the method of the present disclosure and applied to ground chicken patties at concentrations ranging from about 17 microliters per gram to about 50 microliters per gram are effective at preventing oxidation of ground chicken patties.

## Example 4

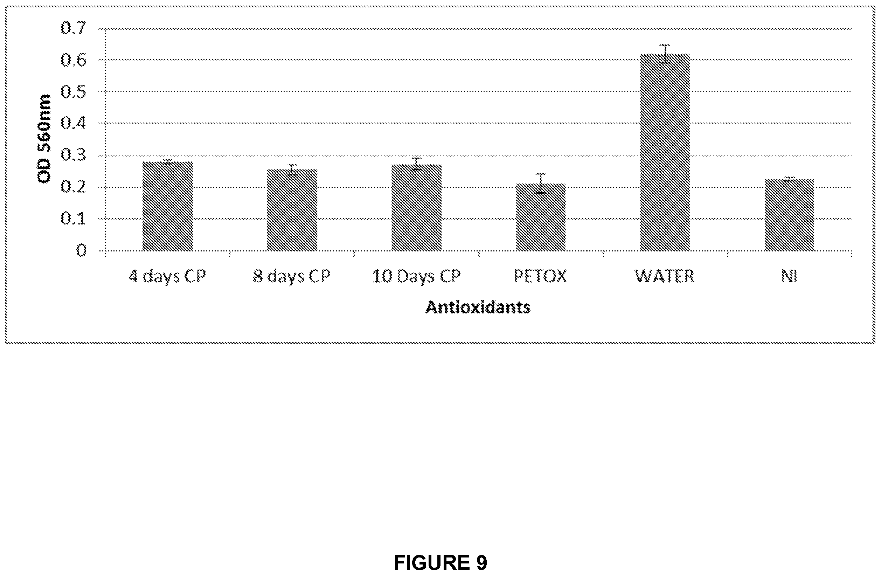

Example 4, which refers to Fig. 9, shows the ability of the natural antioxidants in the crude protein of the present disclosure to remain effective after accelerated aging for up to 10 days at 50°C, which is the equivalent of 3-4 months at a room temperature of about 25°C and more than 1 year at a refrigerated temperature of about 4°C. Crude protein samples were aged for 4 days, 8 days, and 10 days, and incubated with ground chicken meat; the samples were subjected to oxidation at 50°C for 12 hours. Oxidation levels were assessed using FOX assay; each sample treated by crude protein had an absorbance of less than 0.3 when determined at a wavelength of 560 nanometers. This was similar to the absorbance of a sample incubated with PET-OX™ (1000 ppm based on fat content), which not subjected to the accelerated aging that the crude protein antioxidant solutions underwent.

The results of Example 4 show that the crude protein extracted by the method of the present disclosure can have a long shelf life of at least about 3-4 months at room temperature, which is notable given that many proteins and enzymes are fragile and have a limited shelf life.

## Example 5

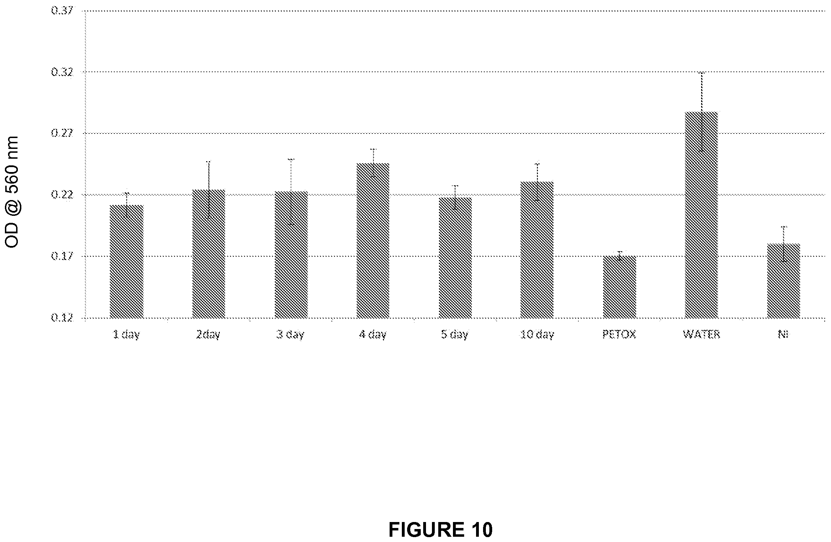

Example 5, which refers to Fig. 10, demonstrates the ability of the natural antioxidants in the crude protein of the present disclosure to remain effective after accelerated aging at 50°C for up to 10 days when used to treat chicken fat. Similar to Example 4, the sample treated with PET-OX™ was not incubated at 50°C. Meanwhile, the crude protein solution of the present disclosure was aged for 1 day, 2 days, 3 days, 4 days, 5 days, and 10 days, after which time 25 microliters of the crude protein was mixed with 475 microliters of chicken fat. Then, the mixture was incubated for 12 hours at 50°C, and a FOX assay performed where the absorbance of each of the solutions at 560 nanometers was determined.

As shown, even after 10 days of accelerated aging, the crude protein solutions of the present disclosure exhibited an absorbance of less than 0.25, which demonstrates that the crude protein was able to prevent oxidation in the chicken fat, and its efficiency was not degrading during accelerated aging.

## Example 6

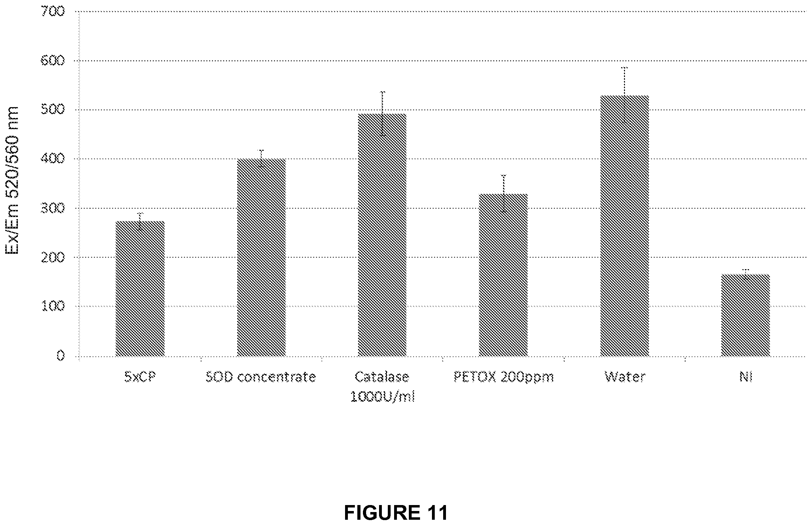

Example6, which refers to Fig. 11, compares the antioxidant activity of a crude protein solution, SOD concentrate, 1000 U/mL catalase, PET-OX™, and water when applied to beef patties using a TBARS assay. The crude protein was obtained using the method of Fig. 5, where 1 millimeter was obtained from 5 milliliters of blood, where the zinc concentration was around 4800 ppm. (However, note that after adding the solution to the beef patty sample, the final zinc content was reduced to around 240 ppm). Then, the crude protein was concentrated 5 times using filtration through a membrane with a molecular weight cutoff of 3,000 Da to yield a 5X concentrate. The SOD was obtained using the method of Fig. 1, where hemoglobin was precipitated by an ethanol-chloroform mixture. For the assay, 1.5 grams of ground beef was mixed with 75 microliters of antioxidants and incubated for 12 hours at 37°C, so that the concentration of antioxidants per gram of meat was 50 microliters per gram. After treating the beef patties with the various antioxidants, water, or a non-incubated control, the TBA assay was performed as described above in Example 1; however TBA content was measured using fluorescence with the excitation wavelength of 520 nm and emission wavelength of 560 nm. The level of TBA present in the sample corresponded to the level of oxidation present based on the fluorescence reading. Hence, a lower fluorescence reading corresponded to a lower of amount of TBA in the sample, which corresponded with a lower amount of oxidation of the animal feed.

As shown, the 5x concentrate of crude protein of the present disclosure showed the lowest amount of oxidation, followed by 1000 ppm of PET-OX™, then the SOD concentrate, then the 1000 U/mL catalase.

## Example 7

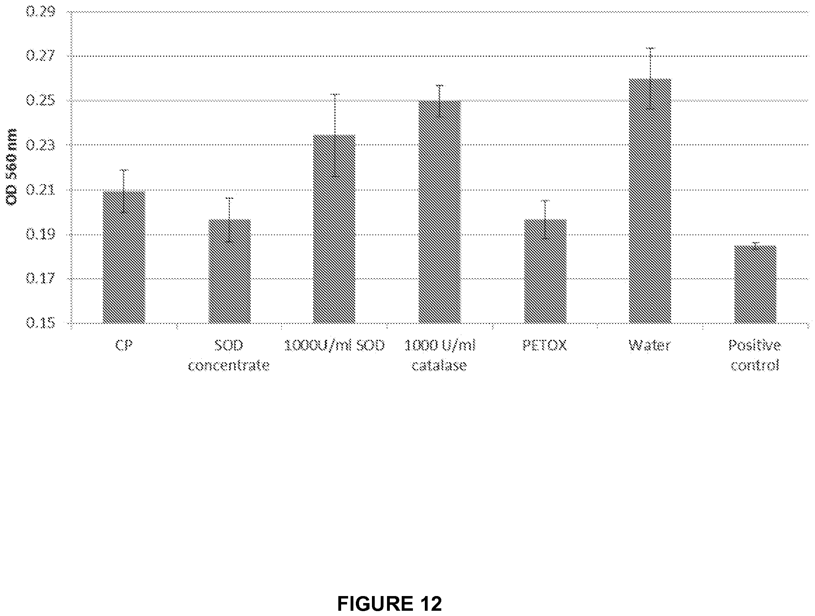

Example 7, which refers to Fig. 12, compares the antioxidant activity of a crude protein solution obtained using the method of Fig. 5, SOD concentrate obtained using the method of Fig. 1, 1000 U/mL SOD, 1000 U/mL catalase, PET-OX™, and water when applied to chicken fat. Water was used as the negative control while a sample stored at 4°C was the positive control. The levels of oxidation were measured using a FOX assay.

As shown, the crude protein, SOD concentrate, and PET-OX™ had absorbances of less than 0.21 at 560 nanometers and were thus must effective at preventing oxidation. The chicken fat treated with water only exhibited the highest level of oxidation, while the 1000 U/mL of commercial bovine SOD and the 1000 U/mL catalase prevented oxidation to a lesser extent than the crude protein, SOD concentrate, and PET-OX™. The Crude protein, SOD concentrate and PET-OX™ inhibited about 85% of the oxidation, while the 1000 U/mL SOD decreased the oxidation by about 34% and the 1000 U/mL catalase decreased the oxidation by about 13%.

## Claims

1. Use of an antioxidant for preserving a food or feed product, wherein the antioxidant is extracted from animal blood, wherein the antioxidant is derived from erythrocytes (red blood cells) in the animal blood after removal of plasma from the animal blood, wherein the antioxidant comprises superoxide dismutase (SOD), catalase, glutathione, glutathione reductase, and glutathione peroxidase.

2. Use of the antioxidant according to claim 1, wherein the animal blood is avian, bovine, or porcine blood.

3. Use of the antioxidant according to claim 1, wherein the antioxidant is generally free from hemoglobin.

4. Use of the antioxidant according to claim 1, wherein the antioxidant is in the form of a solution applied at a concentration ranging from 0.1 microliters per gram of food product to 100 microliters per gram of food product.

**Patentansprüche**

1. Verwendung eines Antioxidans zum Konservieren eines Nahrungs- oder Futtermittelprodukts, wobei das Antioxidans aus Tierblut extrahiert ist, wobei das Antioxidans aus Erythrozyten (roten Blutkörperchen) in dem Tierblut stammt, nachdem Plasma aus dem Tierblut entfernt wurde, wobei das Antioxidans Superoxiddismutase (SOD), Catalase, Glutathion, Glutathionreduktase und Glutathionperoxidase umfasst.

2. Verwendung des Antioxidans nach Anspruch 1, wobei es sich bei dem Tierblut um Geflügel-, Rinder- oder Schweineblut handelt.

3. Verwendung des Antioxidans nach Anspruch 1, wobei das Antioxidans im Wesentlichen frei von Hämoglobin ist.

4. Verwendung des Antioxidans nach Anspruch 1, wobei das Antioxidans in Form einer Lösung vorliegt, die in einer Konzentration angewendet wird, die von 0,1 Mikroliter pro Gramm Nahrungsmittelprodukt bis 100 Mikroliter pro Gramm Nahrungsmittelprodukt reicht.

**Revendications**

1. Utilisation d'un antioxydant destiné à conserver un aliment ou un produit alimentaire, sachant que l'antioxydant est extrait de sang d'animal, sachant que l'antioxydant est dérivé d'érythrocytes (globules rouges) dans le sang d'animal après enlèvement de plasma du sang d'animal, sachant que l'antioxydant comprend de la superoxyde-dismutase (SOD), de la catalase, du glutathion, de la glutathion-réductase, et de la glutathion-peroxydase.

2. Utilisation de l'antioxydant selon la revendication 1, sachant que le sang d'animal est du sang aviaire, bovin, ou porcin.

3. Utilisation de l'antioxydant selon la revendication 1, sachant que l'antioxydant est sensiblement exempt d'hémoglobine.

4. Utilisation de l'antioxydant selon la revendication 1, sachant que l'antioxydant se présente sous la forme d'une solution appliquée dans une concentration allant de 0,1 microlitre par gramme de produit alimentaire à 100 microlitres par gramme de produit alimentaire.

100

```
┌─────────────────┐
│  Obtain crude   │
│  blood from     │
│  animal source  │
└─────────────────┘
         │
         ▼
┌─────────────────┐      ┌──────────────────────┐
│  Centrifuge to  │      │     Removal of       │
│  obtain RBC     │─────▶│  Plasma/Clotting     │
│  pellet         │      │  Factor Supernatant  │
└─────────────────┘      └──────────────────────┘
         │
         ▼
┌─────────────┐   ┌─────────────┐   ┌──────────────┐   ┌──────────────┐
│  Wash RBC   │   │ Lyse RBCs with│  │ Tsuchihashi  │   │ Centrifuge and│
│ pellet in PBS│──▶│Lysing Solution│─▶│ Treatment of │──▶│   Collect    │
│             │   │             │   │   Lysate     │   │  Supernatant │
└─────────────┘   └─────────────┘   └──────────────┘   └──────────────┘
                                                               │
                                                               ▼
┌──────────────┐   ┌──────────────┐   ┌──────────────┐   ┌──────────────┐
│ Centrifuge and│  │  Addition of │   │ Centrifuge and│  │    Desalt    │
│   Collect    │◀──│Organic Solvent│◀─│   Collect    │◀──│  Supernatant │
│  Precipitate │   │   (Acetone)  │   │  Supernatant │   │  with K₂HPO₄ │
│ (Antioxidant)│   └──────────────┘   └──────────────┘   └──────────────┘
└──────────────┘
         │
         ▼
┌──────────────┐
│    Remove    │
│    Acetone   │
└──────────────┘
```

**FIGURE 1**

FIGURE 2

EP 2 877 043 B1

**FIGURE 3**

SOD Extracted From Porcine Blood

SOD Activity (U/mL)

All samples had been stored in solution at 25°C

Plain SOD stored at 25°C
Plain SOD stored at 4°C
SOD+1%Sucrose
SOD+10%Sucrose
SOD+1%Trehalose
SOD+10%Trehalose

TBA assay – analysis for estimation of oxidation

FIGURE 4

EP 2 877 043 B1

200

```
┌─────────────────┐
│   Obtain crude  │
│   blood from    │
│  animal source  │
└─────────────────┘
         │
         ▼
┌─────────────────┐        ┌──────────────────────┐
│  Centrifuge to  │        │      Removal of      │
│   obtain RBC    │───────▶│   Plasma/Clotting    │
│     pellet      │        │  Factor Supernatant  │
└─────────────────┘        └──────────────────────┘
         │
         ▼
┌─────────────────┐
│  Lyse RBCs with │
│   DI H₂O or     │
│   Mechanical    │
│    Shaking      │
└─────────────────┘
         │
         ▼
┌─────────────────┐        ┌──────────────────────┐
│   Precipitate   │        │   Separate Solution  │
│   Hemoglobin    │───────▶│   from Precipitate to│
│  from Solution  │        │     Obtain Crude     │
│                 │        │  Protein/Antioxidants│
└─────────────────┘        └──────────────────────┘
```

FIGURE 5

**FIGURE 6**

FIGURE 7

**FIGURE 8**

FIGURE 9

EP 2 877 043 B1

OD @ 560 nm

0.37  0.32  0.27  0.22  0.17  0.12

1 day  2 day  3 day  4 day  5 day  10 day  PETOX  WATER  Ni

**FIGURE 10**

**FIGURE 11**

FIGURE 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **<XUEMING XU et al.** Antioxidant activity of hydrolysates derived from porcine plasma. *Journal of the Science of Food and Agriculture,* 30 August 2007, vol. 89 (11), 1897-1903
- Antioxidant activity and functional properties of porcine plasma protein hydrolysate as influenced by the degree of hydrolysis. **LIU Q. et al.** Food Chemistry. Elsevier Ltd, 15 January 2010, vol. 118, 403-410

- **JIN-ZHI WANG et al.** Antioxidant activity of hydrolysates and peptide fractions of porcine plasma albumin and globulin. *Journal of Food Biochemistry,* 12 May 2007, vol. 32, 693-707